(19) Europäisches Patentamt
European Patent Office
Office européen des brevets

(11) **EP 0 866 919 B1**

(12) **EUROPÄISCHE PATENTSCHRIFT**

(45) Veröffentlichungstag und Bekanntmachung des Hinweises auf die Patenterteilung:
**02.11.2000 Patentblatt 2000/44**

(21) Anmeldenummer: **96943087.5**

(22) Anmeldetag: **11.12.1996**

(51) Int Cl.⁷: $F15C\ 5/00$

(86) Internationale Anmeldenummer:
**PCT/EP96/05543**

(87) Internationale Veröffentlichungsnummer:
**WO 97/21930 (19.06.1997 Gazette 1997/26)**

(54) **MIKROVENTIL**

MICROVALVE

MICROSOUPAPE

(84) Benannte Vertragsstaaten:
**AT BE CH DE DK ES FR GB IT LI NL SE**

(30) Priorität: **11.12.1995 DE 19546181**

(43) Veröffentlichungstag der Anmeldung:
**30.09.1998 Patentblatt 1998/40**

(73) Patentinhaber:
• **FRAUNHOFER-GESELLSCHAFT ZUR FÖRDERUNG DER ANGEWANDTEN FORSCHUNG E.V.**
**80636 München (DE)**
Benannte Vertragsstaaten:
**BE CH DE DK ES FR GB IT LI NL SE**
• **HYGRAMA AG**
**CH-6343 Rotkreuz (CH)**
Benannte Vertragsstaaten:
**BE CH DE DK ES FR GB IT LI NL SE**
• **Zengerle, Roland**
**78050 Villingen-Schwenningen (DE)**
Benannte Vertragsstaaten:
**AT**

(72) Erfinder:
• **ZENGERLE, Roland**
**D-80337 München (DE)**
• **WIRTL, Johannes**
**D-86956 Schongau (DE)**
• **FRISCH, Herbert**
**A-1238 Wien (AT)**

(74) Vertreter: **Schoppe, Fritz, Dipl.-Ing.**
**Schoppe, Zimmermann & Stöckeler,**
**Patentanwälte,**
**Postfach 71 08 67**
**81458 München (DE)**

(56) Entgegenhaltungen:
**EP-A- 0 401 607**    **EP-A- 0 435 237**
**DE-C- 4 400 315**    **US-A- 4 585 209**
**US-A- 4 654 676**    **US-A- 5 333 831**

EP 0 866 919 B1

**Beschreibung**

Die vorliegende Erfindung bezieht sich auf Ventile zur Steuerung von Fluidströmungen und insbesondere auf Ventile, bei denen eine Ventilplatte von einer Ventilöffnung nur sehr wenig beabstandet ist.

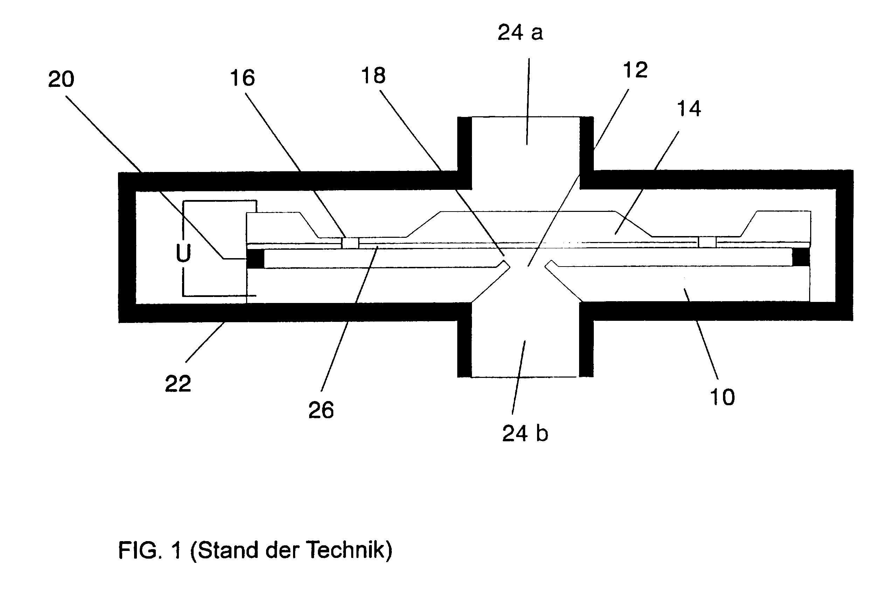

Ein Ventil, auf das die vorliegende Erfindung anwendbar ist, ist beispielsweise ein elektrostatisch angetriebenes Mikroventil, wie es in Fig. 1 dargestellt ist. Ein elektrostatisch angetriebenes Mikroventil besteht aus einem Ventilgrundkörper 10 mit einer Ventilöffnung 12 und einer Ventilplatte 14 mit Fluiddurchführungen 16. Die Ventilöffnung weist typischerweise die Form eines Quadrats mit einer Seitenlänge von 0,2 mm auf. Die Ventilöffnung 12 ist von einer Dichtkante 18 umgeben, die sich entlang des Umfangs der Ventilöffnung 12 erstreckt. Die Dichtkante 18 kann beispielsweise durch eine Erhöhung entlang des Umfangs der Ventilöffnung gebildet sein.

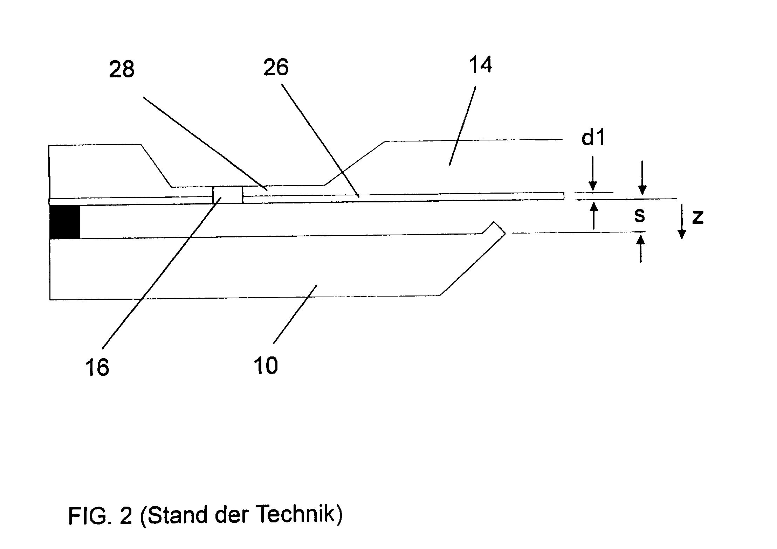

Die Ventilplatte 14 und der Ventilgrundkörper 10 sind relativ zueinander beweglich angeordnet, derart, daß mittels der Ventilplatte 14 die Ventilöffnung 12 des Ventilkörpers 10 geschlossen und geöffnet werden kann. Dabei kann entweder der Ventilgrundkörper starr und die Ventilplatte elastisch oder der Ventilgrundkörper elastisch und die Ventilplatte starr angeordnet sein. Bei dem in Fig. 1 gezeigten Beispiel eines bekannten elektrostatisch angetriebenen Mikroventils ist die Ventilplatte 14 mittels einer Abstandsschicht 20 auf dem Ventilgrundkörper befestigt und weist Verschmalerungen 28 (siehe Fig. 2) in derselben auf. Dadurch ist der mittlere Teil der Ventilplatte 14 gegenüber dem Ventilgrundkörper 10 elastisch aufgehängt. Im Spannungs- bzw. drucklosen Zustand ist die Ventilplatte 14 um einige Mikrometer (typischerweise 5 Mikrometer) von dem Ventilgrundkörper entfernt, wodurch die Ventilöffnung 12 geöffnet ist. Ein derartiges Ventil wird als Normal-Offen-Anordnung (Normally-Open-Anordnung) bezeichnet.

Der Ventilgrundkörper 10 und die Ventilplatte 14 sind in ein Gehäuse 22 eingeschlossen. Das Gehäuse weist zwei Öffnungen 24a, 24b auf, die jeweils als Einlaß oder Auslaß dienen können.

Das Ventil wird durch das Anlegen einer elektrischen Spannung U zwischen Ventilgrundkörper und Ventilplatte betätigt. Dabei fließen Ladungen auf die sich gegenüberliegenden Seiten der beiden Bauteile. Diese Ladungen ziehen sich gegenseitig an, wodurch die Ventilplatte insgesamt zu dem Ventilgrundkörper hinbewegt wird. Um einen elektrischen Kurzschluß zu verhindern, wenn sich die Ventilplatte 14 und die Dichtkante 18 des Ventilgrundkörpers 10 in Kontakt miteinander befinden, ist auf ein oder beide Bauteile eine Isolationsschicht 26 (nur für die Ventilplatte 14 dargestellt) aufgebracht. Bei einem Ventil zur Steuerung von Flüssigkeitsströmungen müssen zur Isolation von Ventilöffnung und Ventilgrundkörper diese beiden Bauteile vollständig von einer Isolationsschicht umgeben sein.

Ein derartiges Mikroventil weist aufgrund des elektrostatischen Antriebsprinzips einen sehr geringen Abstand zwischen Ventilplatte und Ventilgrundkörper auf. Dieser geringe Abstand zwischen Ventilplatte und Ventilgrundkörper beschränkt den Volumenstrom durch das Ventil.

Die EP-A-0435237 offenbart ein elektronisches Mikroventil, das für eine minimierte Betriebsspannung, eine minimierte Betätigungsenergie für die Verschlußplatte des Ventils und gute Verschlußeigenschaften ausgelegt ist. Diese bekannte Mikroventil weist eine qadratische Ventilöffnung auf, die mittels einer senkrecht zu der Öffnung beweglichen Verschlußplatte verschließbar ist. Das bekannte Mikroventil ist zur Erreichung der oben genannten Vorteile aus einer einstückigen Struktur gebildet.

Ausgehend von dem genannten Stand der Technik liegt der vorliegenden Erfindung die Aufgabe zugrunde, ein Mikroventil mit einem erhöhten Durchfluß zu schaffen, ohne die Druckabhängigkeit bzw. die Ansteuerspannung desselben zu beeinflussen.

Diese Aufgabe wird durch ein Mikroventil zur Steuerung einer Fluidströmung gemäß Patentanspruch 1 gelöst.

Die vorliegende Erfindung schafft ein Mikroventil zur Steuerung einer Fluidströmung mit einem Ventilgrundkörper, der eine Ventilöffnung mit einer Dichtkante aufweist, und einer Ventilplatte mit Fluiddurchführungen, die relativ zu dem Ventilgrundkörper beweglich ist, wobei das Mikroventil dadurch gekennzeichnet ist, daß der Verlauf der Dichtkante der Ventilöffnung derart gewählt ist, daß die Länge der Dichtkante größer als die Länge der Dichtkante einer flächenmäßig gleichen quadratischen Ventilöffnung ist.

Vorzugsweise ist der Verlauf der Dichtkante derart gewählt, daß dieselbe wenigstens doppelt so groß wie die Länge der Dichtkante einer flächenmäßig gleichen quadratischen Ventilöffnung ist. Dies kann beispielsweise erreicht werden, indem der Verlauf der Dichtkante eine mäanderförmige Faltung aufweist. Dadurch entstehen Einström- und Ausström-Kanäle mit einer Kanallänge und einer Kanalbreite, durch deren Dimensionen die Länge der Dichtkante bestimmt ist.

Das Mikroventil kann beispielsweise ein elektrostatisches Ventil oder ein piezoelektrisch betätigtes Ventil sein. Um den erreichbaren Volumenstrom weiter zu verbessern, können die Fluiddurchführungen in der Ventilplatte im wesentlichen mittig angeordnet sein. Zur Verbesserung der Schaltzeit des Ventils können der Ventilgrundkörper und/oder die Ventilplatte in den sich gegenüberliegende Oberflächen derselben Strömungskanäle aufweisen.

Weiterbildungen der vorliegenden Erfindung sind in den abhängigen Ansprüchen aufgeführt.

Bevorzugte Ausführungsbeispiele der vorliegenden Erfindung werden nachfolgend unter Bezugnahme auf die beiliegenden Zeichnungen näher erläutert. Es zeigen:

Fig. 1     einen Querschnitt eines bekannten elektrostatischen Mikroventils;

Fig. 2     eine Teilquerschnittansicht eines Mikroventils zur Verdeutlichung der Abmessungen desselben;

Fig. 3     eine Teilquerschnittansicht zur Darstellung der Kräftebilanz im Bereich der Ventilöffnung eines Mikroventils;

Fig. 4a     eine Draufsicht einer herkömmlichen Ventilöffnung;

Fig. 4b     eine Draufsicht eines bevorzugten Ausführungsbeispiel einer Ventilöffnung gemäß der vorliegenden Erfindung;

Fig. 5     einen Vergleich einer quadratischen Ventilöffnung und Ventilöffnungen gemäß der vorliegenden Erfindung bezüglich des Ventilsitzumfangs und der pneumatisch wirksamen Fläche;

Fig. 6     eine Ausgestaltung der Ventilplatte in einem Mikroventil gemäß der vorliegenden Erfindung;

Fig. 7     eine Explosionsdarstellung eines Mikroventils gemäß einem weiteren Ausführungsbeispiel der vorliegenden Erfindung; und

Fig. 8     eine Querschnittansicht eines weiteren Ausführungsbeispiels eines Ventilkörpers und einer Ventilplatte und, die in einem Mikroventil gemäß der vorliegenden Erfindung verwendbar sind.

Bevor bevorzugte Ausführungsbeispiele der vorliegenden Erfindung näher erläutert werden, wird die Betriebsweise eines elektrostatisch betätigten Mikroventils, das die Grundlage des bevorzugten Ausführungsbeispiels der vorliegenden Erfindung bildet, erklärt.

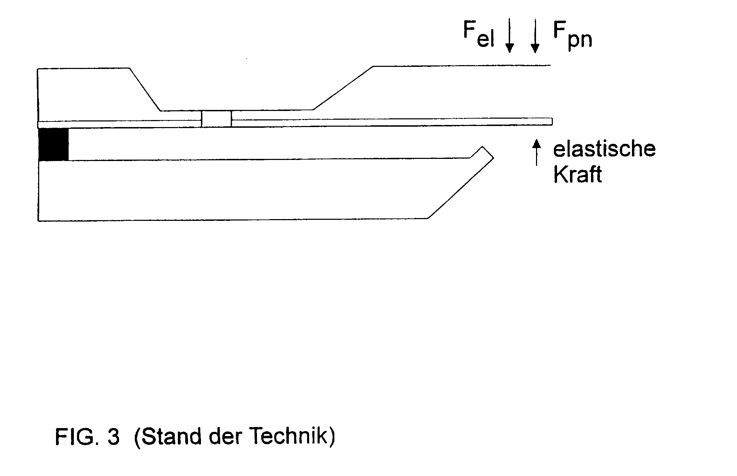

Die Fig. 2 und 3 zeigen Teilschnittansichten des Mikroventils von Fig. 1 zur Veranschaulichung der Betriebsweise desselben. In Fig. 2 sind die Dicke d1 der Isolationsschicht 26 sowie der Abstand des Ventilgrundkörpers 10 von der Isolationsschicht 26 s gezeigt. In Fig. 3 sind die elektrostatische Betätigungskraft $F_{el}$, die in der Richtung z (Fig. 2) wirkt, die pneumatische Angriffskraft $F_{pn}$ und eine elastische Kraft, die durch die Federkraft der Ventilplattenaufhängung erzeugt wird, gezeigt.

Die elektrostatische Betätigungskraft $F_{el}$ berechnet sich gemäß folgender Gleichung:

$$F_{el}(z) = \frac{1}{2} \cdot \frac{\varepsilon_0}{\varepsilon_{gas}} \cdot A_{el} \cdot U^2 \cdot \frac{1}{\left( \dfrac{d_1}{\varepsilon_1} + \dfrac{s}{\varepsilon_{gas}} \right)^2}$$

Da die elektrostatische Betätigungskraft $F_{el}$ linear mit der Größe der Elektrodenflächen $A_{el}$ wächst, wie aus Gleichung (1) zu sehen ist, und gleichzeitig die Betriebsspannung U zur Betätigung des Ventils möglichst gering sein soll, wird die Ventilplatte deutlich größer ausgeführt als die Ventilöffnung. Typische laterale Abmessungen liegen im Bereich einiger Millimeter.

Die Variable $\varepsilon_1$ bezeichnet die Dielektrizitätskonstante der Isolationsschicht 26, $\varepsilon_{gas}$ die des zu pumpenden Fluids, während $d_1$, wie oben erwähnt, die Dicke der Isolationsschicht bezeichnet.

Neben dieser elektrostatischen Betätigungskraft wirken auf die Ventilplatte ferner pneumatische Kräfte, siehe Fig. 3. Wird eine Flußrichtung eines Fluids von oberhalb der Ventilplatte nach unterhalb des Ventilgrundkörpers angenommen, liegt auf der Seite der Ventilplatte ein höherer pneumatischer Druck vor, weshalb die pneumatischen Kräfte ebenfalls zu einer schließenden Tendenz führen. Um den Einfluß der pneumatischen Druckkräfte möglichst gering zu halten, wird darauf geachtet, daß die Ventilplatte weitgehend druckausgeglichen ist. In diesem Fall wirkt der pneumatische Druck nur auf der relativ geringen Fläche der Ventilöffnung, weshalb die pneumatische Angriffskraft $F_{pn}$ entsprechend klein ist. Die pneumatische Angriffskraft $F_{pn}$ ist das Produkt aus der Angriffsfläche $A_{pn}$ und der Druckdifferenz zwischen den Drücken auf beiden Seiten der Ventilplatte $p_e$ - $p_a$.

$$F_{pn} = A_{pn} \times (p_e - p_a) \qquad (2)$$

Der Abstand zwischen Ventilplatte und Ventilgrundkörper stellt sich entsprechend der auf die Ventilplatte wirkenden Kräftebilanz, die in Fig. 3 dargestellt ist, ein. Dabei wirken die elektrostatische und die pneumatische Kraft schließend, während die Federkraft der Ventilplattenaufhängung, die eine elastische Kraft darstellt und linear mit der Auslenkung der Ventilplatte zunimmt, öffnend wirkt.

Bei einem derartigen Mikroventil limitiert die Stelle mit dem kleinsten Strömungsquerschnitt die Höhe des Gasflusses. Die Ventilöffnung ist typischerweise ein Quadrat mit einer Seitenlänge von 0,2 mm, was eine Ventilöffnungsfläche von 0,04 mm² zur Folge hat. Das Produkt zwischen dem Umfang der Ventilöffnung und dem Abstand zur Ventilplatte beträgt typischerweise 4 x 0,2 mm x 0,005 mm = 0,004 mm², da der Abstand zwischen Ventilplatte und Ventilgrundkörper typischerweise kleiner oder gleich 5 $\mu$m ist. Aufgrund dieses geringen Abstands zwischen Ventilplatte und Ventilgrundkörper ist für die Höhe des Gasdurchsatzes durch das Ventil also nicht die durch die Ventilöffnung eingeschlossene Fläche sondern der Umfang der Ventilöffnung maßgebend. Die durch die Ventilöffnung eingeschlossene Fläche beeinflußt jedoch die pneumatische Kraft, die an der Ventilplatte angreift, und damit die Druckabhängigkeit des Ventils.

Um somit den Durchsatz eines Mikroventils zu erhöhen, muß der Ventilsitzumfang erhöht werden, ohne die durch die Ventilöffnung eingeschlossene Fläche gleichzeitig zu vergrößern. Dazu ist eine Ventilöffnung notwendig, durch die einerseits die Angriffsfläche für die pneumatischen Kräfte möglichst gering gehalten ist, während der für den Durchfluß maßgebende Umfang jedoch möglichst groß ist.

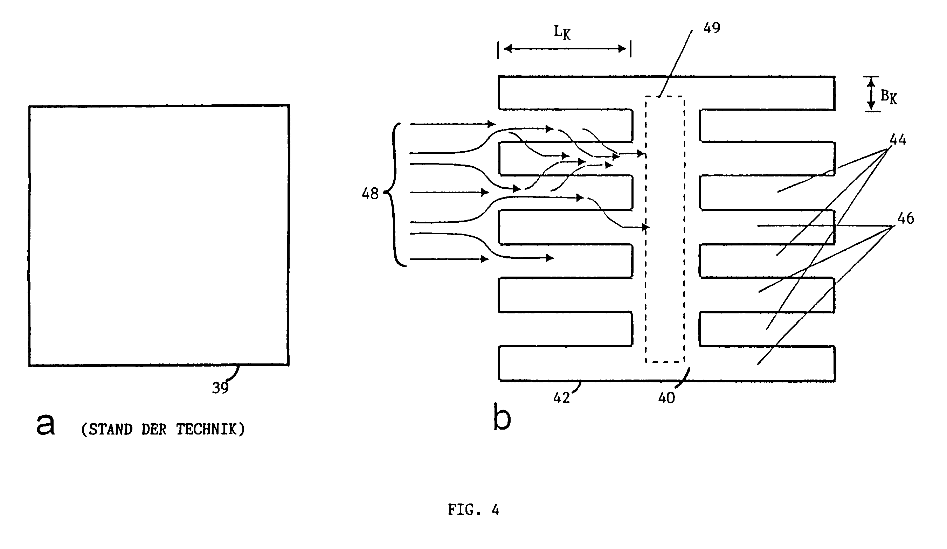

Eine bevorzugte Ausführungsform der Ventilöffnung gemäß der vorliegenden Erfindung ist in Fig. 4b gezeigt. Im Gegensatz dazu ist in Fig. 4a eine übliche quadratische Ausgestaltung einer Ventilöffnung mit einer Dichtkante 39 dargestellt. Bei der in Fig. 4b gezeigten Ventilöffnung 40 ist die Dichtkante 42 der Ventilöffnung 40 mäanderförmig gefaltet. Dadurch ergeben sich Einströmkanäle 44 bzw. Ausströmkanäle 46 für ein zu schaltendes Fluid. Der Fluß eines Fluids ist schematisch durch Pfeile 48 in Fig. 4b dargestellt. Der für die Höhe des Fluiddurchsatzes maßgebliche Umfang der Ventilöffnung kann durch das Einstellen der Kanallänge $L_K$ und der Kanalbreite $B_K$ gewählt werden. Der Umfang der Ventilöffnung nimmt dabei mit abnehmender Breite der Kanäle zu. In Fig. 4b ist in einer gestrichelten Linie die Abflußöffnung 49 durch den Ventilgrundkörper dargestellt.

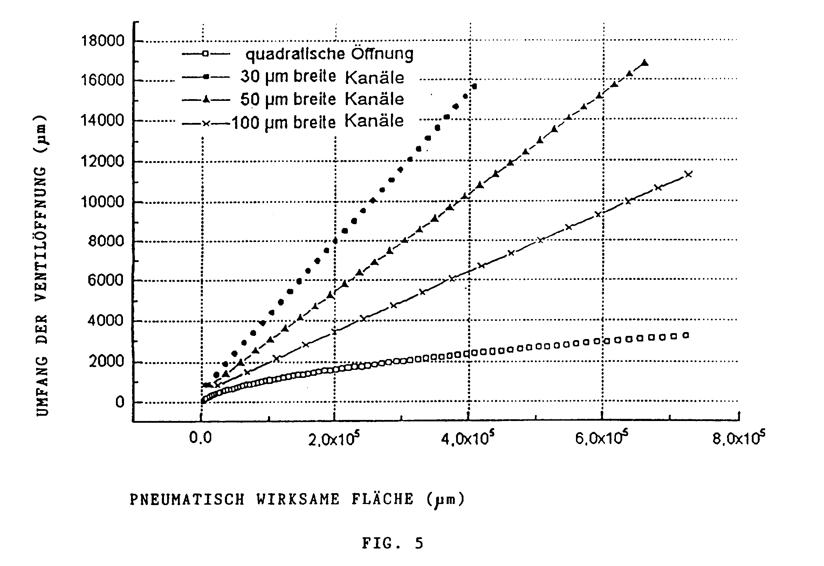

Ein Vergleich von herkömmlicher quadratischer und mäanderförmiger Öffnungsgeometrie der Ventilöffnung gemäß der vorliegenden Erfindung bezüglich des Ventilöffnungsumfangs und der pneumatisch wirksamen Fläche ist in Fig. 5 gezeigt. Dabei ist jeweils der Umfang der Ventilöffnung über der pneumatisch wirksamen Fläche aufgetragen. Es ist zu erkennen, daß bei der Mäanderform der Umfang mit der Fläche weitaus stärker ansteigt als bei der quadratischen Öffnung. Wie aus den Kurven zu sehen ist, steigt der Umfang der Ventilöffnung umso stärker mit der zunehmenden wirksamen Fläche, desto geringer die Kanalbreite ist.

Die Reduzierung der Breite der Strömungskanäle kann durchgeführt werden, bis aufgrund der geringen Breite in dem Strömungskanal Druckverluste auftreten. Mit einer derartigen Anordnung kann der Fluidfluß durch ein Mikroventil um eine Größenordnung gesteigert werden.

Selbstverständlich kann eine Erhöhung des Umfangs bei einer gleichbleibenden Öffnungsfläche auch durch andere Geometrien erreicht werden. Geeignet sind beispielsweise auch trapezförmige oder rautenförmige Faltungen.

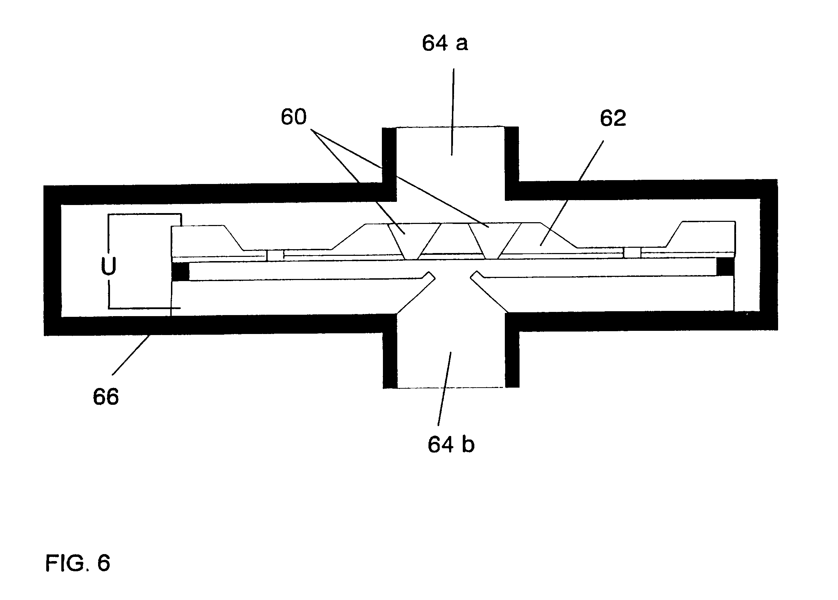

Um den Strömungswiderstand einer Mikroventilanordnung weiter zu reduzieren, bzw. den Ventildurchfluß weiter zu erhöhen, können neben den Fluiddurchführungen, die in Fig. 1 im Bereich der elastischen Aufhängung angeordnet sind, zusätzliche Zufuhröffnungen in der Mitte der Ventilplatte angeordnet werden. Dies ist in Fig. 6 durch Fluiddurchführungen 60 in einer Ventilplatte 62 gezeigt. Das in Fig. 6 gezeigte Ventil befindet sich wiederum in einem Gehäuse 66, das Einlaß- bzw. Auslaß-Öffnungen 64a, 64b aufweist. Durch die Anordnung der Fluiddurchführungen 60 in der Mitte des Mikroventils wird vermieden, daß das Fluid durch den Spalt 68 zwischen der Ventilplatte und dem Ventilgrundkörper zufließen muß. Wie oben beschrieben wurde, ist aufgrund der kurzen Reichweite der elektrostatischen Kräfte dieser Spalt kleiner als 5 µm. Daraus würde sich ein ungünstiger hoher Strömungswiderstand für das Fluid ergeben.

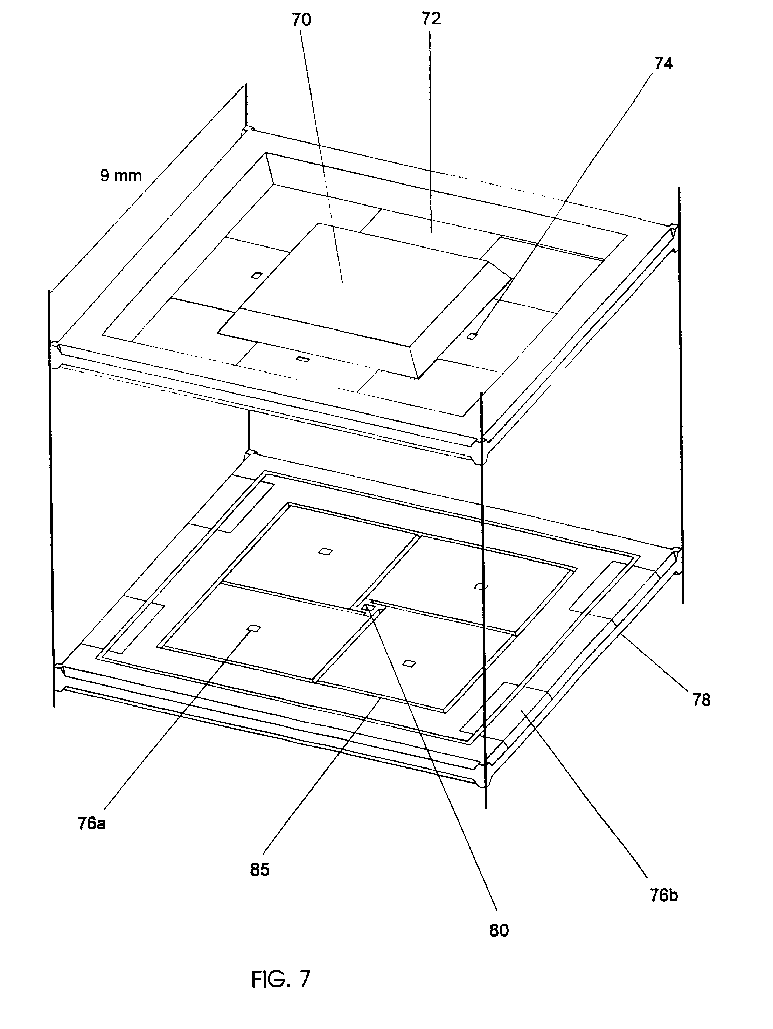

In Fig. 7 ist eine Explosionsdarstellung eines weiteren Ausführungsbeispiels der vorliegenden Erfindung gezeigt. Dabei weist eine Ventilplatte 70 elastische Aufhängungen 72, in denen Fluiddurchführungen 74 angeordnet sind, auf. Durch Abstandsschichten 76b ist eine Ventilgrundplatte 78 von der Ventilplatte getrennt angebracht. Die Abstandsschichten können beispielsweise eine Höhe von 5 um aufweisen. Ferner sind auf der Ventilgrundplatte 78 Vorsprünge 76a angeordnet, die im geschlossenen Zustand ein Verkippen der Ventilplatte verhindern. Die Vorsprünge 76 können beispielsweise eine Höhe von 0,5 µm aufweisen. In der Mitte der Ventilgrundplatte befindet sich eine Ventilöffnung 80, die vorzugsweise gemäß der Geometrie in Fig. 4b ausgebildet ist.

Da das Fluid bei einem Schaltvorgang im Bereich zwischen Ventilplatte und Ventilgrundkörper entweichen muß, wird der zeitliche Verlauf des Schaltvorgangs stark gedämpft. Durch das Vorsehen einzelner oder mehrerer Strömungskanäle auf den sich gegenüberliegenden Oberflächen des Ventilgrundkörpers und/oder der Ventilplatte wird das Entweichen des Fluids erleichtert. Dadurch wird die Schaltzeit des Ventils erheblich verkürzt.

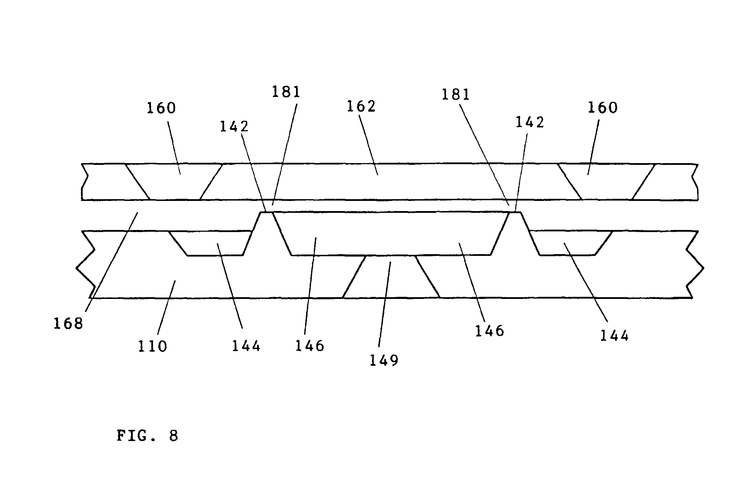

In Fig. 8 ist eine Querschnittdarstellung eines Ventilgrundkörpers 110 und einer Ventilplatte 162 gemäß einem weiteren Ausführungsbeispiel der vorliegenden Erfindung dargestellt. Eine mäanderförmige Dichtlippe 142 umschließt Einströmkanäle 144 und Ausströmkanäle 146. Weist der Spalt 168 zwischen dem Ventilgrundkörper 110 und der Ventilplatte 162 eine ähnliche Größe auf wie der Spalt 181 zwischen der Dichtlippe 142 und der Ventilplatte 162, so bewirkt die Mäanderform der Dichtlippe keine wesentliche Flußvergrößerung, da der Fluidstrom durch das Ventil durch den Spalt 168 ebenso wie durch den Spalt 181 beschränkt wird.

Eine Flußvergrößerung wird dann erreicht, wenn die Tiefe der Einströmkanäle 144 und der Ausströmkanäle 146 größer ist als der Spalt 181 zwischen Dichtlippe 142 und Ventilplatte 162. Bei einem Fluidweg durch die Ventildurchführungen 160, durch die Einlaßkanäle 146, durch den Spalt 181 zwischen der Dichtlippe 142 und der Ventilplatte 162, durch die Auslaßkanäle 146 und die Abflußöffnung 149 bewirkt dann allein der Spalt 181 die wesentliche Begrenzung des Fluidstroms. Diese Ausführungsform ist vor allem dann von Vorteil, wenn beispielsweise für die Wirksamkeit der elektrostatischen Kraft, die in Gleichung (1) beschrieben ist, der Spalt 168 zwischen dem Ventilgrundkörper 110 und der Ventilplatte 162 klein ausfallen soll.

Die vorliegende Erfindung schafft somit ein Mikroventil mit einem erheblich erhöhten Durchsatz, ohne die Druckabhängigkeit oder die Ansteuerspannung des Mikroventils zu erhöhen. Ferner kann mit der vorliegenden Erfindung ein Mikroventil mit einer verringerten Schaltzeit realisiert werden. Es ist ferner offensichtlich, daß ein Mikroventil gemäß der vorliegenden Erfindung alternativ zu den beschriebenen Ausführungsbeispielen statt einer einzelnen Ventilöffnung auch eine Mehrzahl von Ventilöffnungen aufweisen kann.

**Patentansprüche**

1. Mikroventil zur Steuerung einer Fluidströmung mit einem Ventilgrundkörper (10), der eine Ventilöffnung (12; 40) mit einer Dichtkante aufweist, und einer Ventilplatte (14) mit Fluiddurchführungen (16; 60), wobei die Ventilplatte (14) senkrecht zu dem Ventilgrundkörper (10) beweglich ist, derart, daß die Ventilplatte (14) in einer ersten Stellung die Ventilöffnung (12; 40) verschließt und in einer zweiten Stellung senkrecht von der Ventilöffnung (12; 40) derart beabstandet ist, daß ein Strömungsquerschnitt, der durch die Ventilöffnung (12; 40) und die Ventilplatte (14) definiert ist, maßgeblich durch den Abstand der Dichtkante zu der Ventilplatte (14) bestimmt ist, dadurch gekennzeichnet, daß der Verlauf der Dichtkante (42) der Ventilöffnung (12; 40) derart gewählt ist, daß die Länge der Dichtkante (42) größer als die Länge einer Dichtkante (39) einer flächenmäßig gleichen quadratischen Ventilöffnung ist.

2. Mikroventil gemäß Anspruch 1, dadurch gekennzeichnet, daß der Verlauf der Dichtkante (42) derart gewählt ist, daß die Länge der Dichtkante (42) wenigstens zweimal so groß wie die Länge der Dichtkante (39) einer flächenmäßig gleichen quadratischen Ventilöffnung ist.

3. Mikroventil gemäß Anspruch 1 oder 2, dadurch gekennzeichnet, daß der Verlauf der Dichtkante (42) mäanderförmig gefaltet ist und Einström- und Ausström-Kanäle (44, 46) mit einer Kanallänge ($L_K$) und einer Kanalbreite ($B_K$) bildet, wobei die Länge der Dichtkante (42) durch die Kanallänge ($L_K$) und die Kanalbreite ($B_K$) bestimmt ist.

4. Mikroventil gemäß Anspruch 1 oder 2, dadurch gekennzeichnet, daß der Verlauf der Dichtkante trapezförmig gefaltet ist.

5. Mikroventil gemäß Anspruch 1 oder Anspruch 2, dadurch gekennzeichnet, daß der Verlauf der Dichtkante rautenförmig gefaltet ist.

6. Mikroventil gemäß einem der Ansprüche 1 bis 5, dadurch gekennzeichnet, daß der Ventilgrundkörper (10) starr ist, und die Ventilplatte (14) elastisch aufgehängt ist.

7. Mikroventil gemäß einem der Ansprüche 1 bis 6, dadurch gekennzeichnet, daß die Dichtkante aus einer Erhöhung entlang des Umfangs der Ventilöffnung (12; 40) besteht.

8. Mikroventil gemäß einem der Ansprüche 1 bis 7, dadurch gekennzeichnet, daß das Mikroventil ein elektrostatisches Ventil ist.

9. Mikroventil gemäß einem der Ansprüche 1 bis 7, dadurch gekennzeichnet, daß das Mikroventil ein piezoelektrisch betätigtes Ventil ist.

10. Mikroventil gemäß einem der Ansprüche 1 bis 9, dadurch gekennzeichnet, daß zusätzliche Fluiddurchführungen (60) in der Ventilplatte (62) im wesentlichen mittig angeordnet sind.

11. Mikroventil gemäß einem der Ansprüche 1 bis 10, dadurch gekennzeichnet, daß der Ventilgrundkörper (78) in der der Ventilplatte (70) gegenüberliegenden Oberfläche Strömungskanäle (85) aufweist.

12. Mikroventil gemäß einem der Ansprüche 1 bis 11, dadurch gekennzeichnet, daß die Ventilplatte (70) in der dem Ventilgrundkörper (78) gegenüberliegenden Oberfläche Strömungskanäle aufweist.

**Claims**

1. A microvalve for controlling a fluid flow, comprising a valve body (10) provided with a valve opening (12; 40) having a sealing edge, and a valve plate (14) provided with fluid openings (16; 60), said valve plate (14) being adapted to be moved perpendicularly to the valve body (10) in such a way that, at a first position, said valve plate (14) closes the valve opening (12; 40), whereas, at a second position, it is perpendicularly spaced from said valve opening (12; 40) in such a way that a flow cross-section defined by said valve opening (12; 40) and said valve plate (14) is decisively determined by the distance between the sealing edge and the valve plate (14), characterized in
that the contour of the sealing edge (42) of the valve opening (12; 40) is chosen such that the length of the sealing edge (42) exceeds the length of a sealing edge (39) of a square valve opening which is equal in area.

2. A microvalve according to claim 1, characterized in
that the contour of the sealing edge (42) is chosen such that the length of the sealing edge (42) is at least twice as large as the length of the sealing edge (39) of a square valve opening which is equal in area.

3. A microvalve according to claim 1 or 2, characterized in
that the contour of the sealing edge (42) is folded into a meandrous shape and defines inlet and outlet passages (44, 46) having a passage length ($L_K$) and a passage width ($B_K$), the length of the sealing edge (42) being determined by the passage length ($L_K$) and the passage width ($B_K$).

4. A microvalve according to claim 1 or 2, characterized in
that the contour of the sealing edge is folded into a trapezoidal shape.

5. A microvalve according to claim 1 or claim 2, characterized in
that the contour of the sealing edge is folded into a diamond shape.

6. A microvalve according to one of the claims 1 to 5, characterized in
that the valve body (10) is fixed, and that the valve plate (14) is elastically suspended.

7. A microvalve according to one of the claims 1 to 6, characterized in
that the sealing edge consists of a raised portion along the circumference of the valve opening (12; 40).

8. A microvalve according to one of the claims 1 to 7, characterized in
that the microvalve is an electrostatic valve.

9. A microvalve according to one of the claims 1 to 7, characterized in
that the microvalve is a piezoelectrically actuated valve.

10. A microvalve according to one of the claims 1 to 9, characterized in
that additional fluid openings (60) are arranged in the valve plate (62) essentially at the centre thereof.

11. A microvalve according to one of the claims 1 to 10, characterized in
that the valve body (78) is provided with flow passages (85) which are arranged in the surface located opposite the valve plate (70).

12. A microvalve according to one of the claims 1 to 11, characterized in
that the valve plate (70) is provided with flow passages which are arranged in the surface located opposite the valve body (78).

**Revendications**

1. Microsoupape destinée à la commande d'un écoulement de fluide, avec un corps de base de soupape (10) présentant un orifice de soupape (12 ; 40) avec une arête d'étanchéité, et un siège de soupape (14) à passages de fluide (16 ; 60), le siège de soupape (14) pouvant se déplacer perpendiculairement au corps de base de soupape (10), de sorte que le siège de soupape (14) obture, en une première position, l'orifice de soupape (12 ; 40) et est, en une seconde position, distant perpendiculairement de l'orifice de soupape (12 ; 40) de telle sorte qu'une section d'écoulement définie par l'orifice de soupape (12 ; 40) et le siège de soupape (14) est déterminée de manière décisive par la distance entre l'arête d'étanchéité et le siège de soupape (14), caractérisée par le fait que le tracé de l'arête d'étanchéité (42) de l'orifice de soupape (12 ; 40) est choisi de telle sorte que la longueur de l'arête d'étanchéité (42) est plus grande que la longueur d'une arête d'étanchéité (39) d'un orifice de soupape carré de même surface.

2. Microsoupape suivant la revendication 1, caractérisée par le fait que le tracé de l'arête d'étanchéité (42) est choisi de telle sorte que la longueur de l'arête d'étanchéité (42) est au moins deux fois plus grande que la longueur d'une arête d'étanchéité (39) d'un orifice de soupape carré de même surface.

3. Microsoupape suivant la revendication 1 ou 2, caractérisée par le fait que le tracé de l'arête d'étanchéité (42) est plié en méandre et forme des canaux d'entrée et de sortie (44, 46) à longueur de canal ($L_K$) et à largeur de canal ($B_K$), la longueur de l'arête d'étanchéité (42) étant déterminée par la longueur de canal ($L_K$) et la largeur de canal ($B_K$).

**4.** Microsoupape suivant la revendication 1 ou 2, caractérisée par le fait que le tracé de l'arête d'étanchéité est plié en forme de trapèze.

**5.** Microsoupape suivant la revendication 1 ou 2, caractérisée par le fait que le tracé de l'arête d'étanchéité est plié en forme de losange.

**6.** Microsoupape suivant l'une des revendications 1 à 5, caractérisée par le fait que le corps de base de soupape (10) est rigide et que le siège de soupape (14) est suspendu élastiquement.

**7.** Microsoupape suivant l'une des revendications 1 à 6, caractérisée par le fait que l'arête d'étanchéité consiste en une élévation sur le pourtour de l'orifice de soupape (12 ; 40).

**8.** Microsoupape suivant l'une des revendications 1 à 7, caractérisée par le fait que la microsoupape est une soupape électrostatique.

**9.** Microsoupape suivant l'une des revendications 1 à 7, caractérisée par le fait que la microsoupape est une soupape à actionnement piézoélectrique.

**10.** Microsoupape suivant l'une des revendications 1 à 9, caractérisée par le fait que des passages de fluide (60) supplémentaires sont disposés sensiblement au centre dans le siège de soupape (62).

**11.** Microsoupape suivant l'une des revendications 1 à 10, caractérisée par le fait que le corps de base de soupape (78) présente, dans la surface opposée au siège de soupape (70), des canaux d'écoulement (85).

**12.** Microsoupape suivant l'une des revendications 1 à 11, caractérisée par le fait que le siège de soupape (70) présente, dans la surface opposée au corps de base de soupape (78), des canaux d'écoulement.

FIG. 1 (Stand der Technik)

FIG. 2 (Stand der Technik)

EP 0 866 919 B1

FIG. 3 (Stand der Technik)

a   (STAND DER TECHNIK)

b

FIG. 4

PNEUMATISCH WIRKSAME FLÄCHE (μm)

FIG. 5

FIG. 6

FIG. 7

160    142    181    162    181    142    160

168    110    144    146    149    146    144

FIG. 8